# EUROPÄISCHE PATENTSCHRIFT

(11) **EP 3 269 579 B1**
(45) Veröffentlichungstag und Bekanntmachung des Hinweises auf die Patenterteilung: **05.05.2021**
(21) Anmeldenummer: 16179498.7
(22) Anmeldetag: 14.07.2016
(51) Int. Cl.: B60K 37/06

(54) **VERFAHREN ZUM BETREIBEN EINES INFORMATIONSSYSTEMS UND INFORMATIONSSYSTEM**
METHOD FOR OPERATING AN INFORMATION SYSTEM AND INFORMATION SYSTEM
PROCEDE DE FONCTIONNEMENT D'UN SYSTEME D'INFORMATIONS ET SYSTEME D'INFORMATIONS

(43) Veröffentlichungstag der Anmeldung: 17.01.2018
(73) Patentinhaber: Volkswagen Aktiengesellschaft, 38440 Wolfsburg (DE)
(72) Erfinder: Cengil, Sükrü, 30938 Burgwedel (DE); Kögler, Indra-Lena, 10829 Berlin (DE); Schnurr, Andrea, 38368 Mariental (DE)
(74) Vertreter: Reitstötter Kinzebach

(56) Entgegenhaltungen:
- WO-A2-2006/108617
- DE-A1-102014 009 985

## Beschreibung

Verfahren zum Betreiben eines Informationssystems und Informationssystem Die vorliegende Erfindung betrifft ein Verfahren zum Betreiben eines Informationssystems und ein Informationssystem sowie ein Fahrzeug.

Zur Verbesserung der Sicherheit und des Komforts beim Fahren mit einem Fahrzeug werden in zunehmendem Maße Fahrerassistenzsysteme verwendet. Dabei ist es von zentraler Bedeutung, dass der Nutzer des Fahrzeugs, insbesondere der Fahrer, über die Tätigkeit der verschiedenen Systeme informiert wird, um die Fahrsituation beurteilen zu können und nötigenfalls Eingriffe vorzunehmen. Gleichzeitig bringt die Fülle der potentiell verfügbaren Informationen die Herausforderung mit sich, diese auszugeben und den Nutzer über relevante Sachverhalte kompakt und schnell zu informieren.

Typischerweise werden dazu beispielsweise Displays eingesetzt, auf denen unterschiedliche Informationen dargestellt werden können, wie in den Dokumenten WO2006/108617 A2 oder DE 10 2014 009985 A1 offenbart.

Der vorliegenden Erfindung liegt die Aufgabe zugrunde, ein Verfahren zum Betreiben eines Informationssystems und ein Informationssystem sowie ein Fahrzeug bereitzustellen, bei denen die relevanten Informationen eines Fahrerassistenzsystems besonders deutlich und flexibel angezeigt werden.

Erfindungsgemäß wird diese Aufgabe durch ein Verfahren mit den Merkmalen des Anspruchs 1 und ein Informationssystem mit den Merkmalen des Anspruchs 11 sowie ein Fahrzeug mit den Merkmalen des Anspruchs 13 gelöst. Vorteilhafte Ausgestaltungen und Weiterbildungen ergeben sich aus den abhängigen Ansprüchen.

Bei dem erfindungsgemäßen Verfahren zum Betreiben eines Informationssystems weist das Informationssystem einen ersten aktivierbaren Modus und einen zweiten aktivierbaren Modus auf. Bei dem Verfahren werden Ausgabedaten eines Fahrerassistenzsystems eines Fahrzeugs erfasst. In Abhängigkeit von dem aktivierten Modus und den Ausgabedaten werden Grafikdaten einer Darstellung erzeugt und mittels einer Anzeigefläche ausgegeben. Ein Modusauswahlsignal wird empfangen und in Abhängigkeit von dem Modusauswahlsignal wird der erste oder zweite Modus aktiviert. Dabei umfassen die Grafikdaten eine Fahrbahndarstellung einer vor dem Fahrzeug liegenden Fahrbahn und eine Ego-Fahrzeugdarstellung, wobei, wenn der erste Modus aktiviert ist, die Ego-Fahrzeugdarstellung eine teilweise Darstellung eines vorderen Fahrzeugteils umfasst und, wenn der zweite Modus aktiviert ist, die Ego-Fahrzeugdarstellung eine Darstellung einer rückwärtigen Fahrzeugansicht umfasst, wobei wenn anhand des Modusauswahlsignals ein Umschalten zwischen dem ersten und zweiten Modus vorgenommen wird, eine Übergangsanimation erzeugt und ausgegeben wird, wobei die Übergangsanimation eine kontinuierliche Vergrößerung der Darstellung umfasst, wobei ein virtueller Beobachtungspunkt entgegen der Fahrtrichtung verlagert wird.

Dadurch wird vorteilhafterweise eine besonders einfach konfigurierbare Ausgabe der Ausgabedaten des Fahrerassistenzsystems für einen Nutzer ermöglicht, wobei insbesondere situationsbezogen zwischen den Modi umgeschaltet werden kann.

Insbesondere umfassen die Grafikdaten bei dem ersten Modus eine kleinere und bei dem zweiten Modus eine größere Darstellung der Ausgabedaten. Dadurch kann die Anzeigefläche besonders effizient genutzt werden, da der Flächenverbrauch der größeren Darstellung auf den zweiten Modus beschränkt ist, während im ersten Modus eine platzsparende Anzeige ausgegeben wird. Die zur Verfügung stehende Fläche kann daher besonders effizient zur Ausgabe genutzt werden und die Fülle der potentiell ausgebbaren Informationen kann flexibel und übersichtlich dem Nutzer zugänglich gemacht werden.

Unter einem "Fahrerassistenzsystem" wird eine Einrichtung eines Fahrzeugs verstanden, welche den Fahrer beim Fahren des Fahrzeugs unterstützt. Fahrerassistenzsysteme im Sinne der Erfindung umfassen somit sowohl reine Informationssysteme, welche den Fahrer unterstützen, als auch Einrichtungen, welche automatisch die Fortbewegung des Fahrzeugs beeinflussen, wobei sie die Funktion solcher Einrichtungen regeln können oder in die Funktion eingreifen können.

Ohne das Fahrerassistenzsystem beeinflusst der Fahrer direkt die Bewegung des Fahrzeugs. Es werden allenfalls Signale oder Bewegungen von durch den Fahrer betätigten Bedienelementen, wie der Pedalerie, dem Schaltknüppel oder dem Lenkrad, an entsprechende Einrichtungen des Fahrzeugs übertragen, welche die Fortbewegung des Fahrzeugs beeinflussen. Eine derartige Fortbewegung des Fahrzeugs entspricht dem geringsten Grad der Automatisierung.

Bei einem höheren Grad der Automatisierung wird zum Teil automatisch in Einrichtungen eingegriffen, welche der Fortbewegung des Fahrzeugs dienen. Beispielsweise wird in die Lenkung des Fahrzeugs oder die Beschleunigung in positiver oder negativer Richtung eingegriffen. Bei einem noch höheren Grad der Automatisierung wird soweit in Einrichtungen des Fahrzeugs eingegriffen, dass bestimmte Fortbewegungsarten des Fahrzeugs, zum Beispiel eine Geradeausfahrt, automatisch ausgeführt werden können. Beim höchsten Grad der Automatisierung können Routen eines Navigationssystems im Wesentlichen automatisch gefahren werden. Es wird jedoch darauf hingewiesen, dass der Fahrer zwar mit der Wahl eines höheren Grades der Automatisierung die Kontrolle über die Fahrzeugführung in zunehmendem Maße abgeben kann. Er kann diese Kontrolle jedoch insbesondere durch aktives Lenken oder Betätigen der Pedalerie sofort wieder zurückgewinnen.

Des Weiteren können Fahrerassistenzsysteme verschiedene Sicherheitsfunktionen erfüllen. Bei einem geringen Grad der Automatisierung werden dem Fahrer über ein Fahrerassistenzsystem nur Informationen ausgegeben, die den Fahrer in der Art und Weise, wie er das Fahrzeug fortbewegt, beeinflussen. In einem höheren Grad der Sicherheitsfunktionen werden Warnungen ausgegeben, die eine unmittelbare Reaktion des Fahrers erfordern. Bei diesem Grad der Sicherheitsfunktionen greifen die Fahrerassistenzmodule jedoch nicht aktiv und automatisch in die Funktion der Einrichtungen ein, welche die Fortbewegung des Fahrzeugs beeinflussen.

In einem noch höheren Grad der Sicherheitsfunktionen wird zum Teil automatisch in Einrichtungen eingegriffen, welche der Fortbewegung des Fahrzeugs dienen. Beispielsweise wird in die Lenkung des Fahrzeugs oder die Beschleunigung in positiver oder negativer Richtung insbesondere präventiv eingegriffen. Bei einem noch höheren Grad der Sicherheitsfunktionen wird soweit in Einrichtungen des Fahrzeugs eingegriffen, welche die Fortbewegung des Fahrzeugs beeinflussen, dass automatisch Manöver des Fahrzeugs ausgeführt werden können, wie beispielsweise eine Vollbremsung oder ein gezieltes Ausweichmanöver, um eine Kollision zu vermeiden.

Durch die Hinweise, welche von dem Fahrerassistenzsystem ausgegeben werden, wird der Fahrer des Fahrzeugs auf bestimmte Gefahren aufmerksam gemacht. Dies erhöht die Sicherheit beim Führen des Fahrzeugs. Bei einem aktiven Eingriff eines Fahrerassistenzsystems in die Fortbewegung des Fahrzeugs können auch dann gefährliche Fahrsituationen, wie Kollisionen oder unkontrollierte Bewegungen des Fahrzeugs, vermieden werden, wenn der Fahrer nicht direkt in das Fahrgeschehen eingreift. Bei den Sicherheitsfunktionen des Fahrerassistenzsystems behält jedoch der Fahrer insbesondere stets die volle Kontrolle und Verantwortung über die Fahrsituation. Das Fahrerassistenzsystem greift erst bei einer unmittelbaren Kollisionsgefahr ein.

Neben der gegebenenfalls direkten Einwirkung auf die Steuerung des Fahrzeugs ist bei Fahrerassistenzsystemen typischerweise vorgesehen, dass der Fahrer mit einer bestimmten Detailtiefe über die Tätigkeit des Fahrerassistenzsystems informiert wird. Beispielsweise kann dies mittels optisch, akustisch oder haptisch wahrnehmbarer Signale erfolgen. Dadurch wird sichergestellt, dass der Fahrer den Einfluss eines Fahrerassistenzsystems auf die Fahrt einschätzen und gegebenenfalls steuernd eingreifen kann; ferner soll der Fahrer typischerweise automatische Eingriffe in die Steuerung frühzeitig erkennen, um nicht von ihnen überrascht zu werden.

Das Fahrerassistenzsystem betrifft insbesondere die Bewegung des Fahrzeugs in Längs- und/oder Querrichtung. Dabei weisen die Ausgabedaten auch einen besonderen Bezug zum Fahrzeug und seiner Umgebung in die Längs- und/oder Querrichtung auf. Beispielsweise können Informationen über weitere Fahrzeuge sowie über die befahrene Strecke von Bedeutung sein.

Die Anzeigefläche kann auf an sich bekannte Weise gebildet sein. Beispielsweise kann ein freiprogrammierbares Kombiinstrument (FPK) verwendet werden, das typischerweise im Sichtfeld des Fahrers oder knapp darunter im Fahrzeug angeordnet ist. Ferner kann ein Kombiinstrument mit Rundinstrumenten verwendet werden, typischerweise sind zwei "Tuben", das heißt großflächige Rundinstrumente, vorgesehen. Die Darstellung kann dabei innerhalb des Bereichs der von den Tuben eingenommenen Fläche angeordnet sein oder zwischen beziehungsweise neben den Tuben. Die Tuben können dabei physisch abgegrenzte Bereiche der Anzeigefläche sein, in denen insbesondere analoge Rundinstrumente angeordnet sein können. Es kann jedoch auch ein freiprogrammierbares Kombiinstrument vorgesehen sein, das völlig frei gestaltbar ist und bei dem etwa die Rundinstrumente mittels einer Darstellung angezeigt werden.

Alternativ oder zusätzlich können weitere Anzeigeflächen des Fahrzeugs verwendet werden, etwa ein Mitteldisplay. Es kann ferner vorgesehen sein, dass die Anzeige mittels einer Anzeigefläche eines weiteren Ausgabevorrichtung ausgegeben wird, beispielsweise mittels eines Nutzergeräts, etwa eines Mobilgeräts, das datentechnisch zumindest zeitweise mit dem Fahrzeug verbunden ist.

Das Modusauswahlsignal kann auf verschiedene Weise empfangen werden. Es kann beispielsweise anhand einer Bedienhandlung erfasst werden, etwa durch eine Betätigung eines Schalters oder eines Bedienelements einer grafischen Bedienoberfläche, durch eine Geste oder durch eine sprachliche Anweisung. Ferner kann ein automatisches Umschalten oder eine Auswahl des aktivierten Modus anhand eines Signals einer Einrichtung des Fahrzeugs vorgenommen werden. Beispielsweise kann vorgesehen sein, dass das Modusauswahlsignal erzeugt wird, wenn eine bestimmte Maßnahme des Fahrerassistenzsystems eingeleitet wird. Zum Beispiel kann dies eine bestimmte Art von Eingriff in die Fahrzeugsteuerung sein oder ein Eingriff, der eine bestimmte Amplitude überschreitet oder ein anderes Maß, welches die Intensität oder Bedeutung des Eingriffs für den Fahrer angibt.

Es kann eine Umschaltung vorgenommen werden, die bei einem Empfang des Modusauswahlsignals zu einer Veränderung der Grafikdaten und der damit ausgegebenen Informationen führt. Ein solches Signal kann zum Beispiel mittels eines Tastschalter erzeugt werden. Ferner kann vorgesehen sein, dass der erste oder zweite Modus direkt aktiviert werden, dass also ein Wechsel nur erfolgt, wenn aktuell ein anderer als der gewählte Modus aktiviert ist. Beispielsweise kann dies anhand eines Schalters mit zwei Stellungen erfolgen, wobei jeder Stellung ein Modus zugeordnet ist.

Die Grafikdaten werden dabei so erzeugt, dass sie Informationen über eine vor dem Fahrzeug liegende Fahrbahn umfassen. Die Fahrbahn kann dabei auf verschiedene Weise angezeigt werden und es können verschieden detaillierte und/oder abstrahierte Darstellungen erzeugt werden. Insbesondere kann die Fahrbahn eine oder mehrere Fahrspuren umfassen. Beispielsweise können seitliche Begrenzungslinien den Verlauf einer Fahrbahn andeuten und/oder es kann einer Fläche angezeigt werden, welche einer Fahrbahnoberfläche im Bereich des Fahrzeugs entspricht. Dabei kann die Darstellung die Fahrspur des Fahrzeugs selbst und/oder Nachbarspuren betreffen. Ferner kann vorgesehen sein, dass verschiedene Fahrspuren der Fahrbahn umfasst sind und insbesondere verschiedene Darstellungsformen gewählt werden. Beispielsweise kann die Fahrspur des Ego-Fahrzeugs mittels Fahrbahnmarkierungen oder Linien innerhalb der Darstellung dargestellt werden, während benachbarte Fahrspuren mittels einer Auskragung am Rand der Darstellung dargestellt werden. Im letzteren Fall ist vorgesehen, dass die Nachbarfahrspuren durch einen an die Fahrbahndarstellung angrenzenden freien Raum dargestellt werden, wobei keine weiteren Markierungen vorgesehen sind. Die Mittel der Darstellung eines eigenen und der benachbarten Fahrstreifen werden insbesondere in Abhängigkeit von dem aktivierten Modus gewählt, beispielsweise kann in dem ersten Modus eine verkleinerte, reduzierte und/oder weniger detailliert ausgeführte Darstellung der Fahrbahn erfolgen, während eine größere Darstellung des zweiten Modus gegebenenfalls eine detailreichere Darstellung ermöglicht.

Insbesondere kann dabei auch eine vor dem Ego-Fahrzeug liegende Kurve dargestellt werden, die typischerweise eine besonders relevante Eigenschaft der Fahrbahn darstellt.

Ferner ist eine Ego-Fahrzeugdarstellung umfasst, durch die eine direkte Verbindung der Anzeige zum Fahrzeug selbst, in dessen Steuerung der Fahrer eingreifen kann, hergestellt wird. Diese Darstellung kann mehr oder weniger genau dem Aussehen des Ego-Fahrzeugs entsprechen und in verschiedenem Grad abstrahiert sein. Ferner kann die Perspektive der Darstellung unterschiedlich gewählt sein, wobei jedoch eine Darstellung so erzielt wird, dass eine Ansicht in Fahrtrichtung umfasst ist und der Bezug zur weiteren Fahrt des Ego-Fahrzeugs besteht.

Die Ego-Fahrzeugdarstellung ist dabei ein Merkmal, in dem sich die Darstellungen im ersten und zweiten Modus unterscheiden: Im ersten Modus wird eine Teilansicht des Ego-Fahrzeugs dargestellt, wobei insbesondere ein vorderer Teil des dargestellten Ego-Fahrzeugs umfasst ist. Beispielsweise kann dies dadurch erfolgen, dass die Perspektive der Darstellung so gewählt ist, dass das Ego-Fahrzeug von einer Position oberhalb des Fahrzeugdachs dargestellt erscheint. Ferner ist im zweiten Modus vorgesehen, dass eine rückwärtige Fahrzeugansicht auf das Ego-Fahrzeug angezeigt wird. Die Ego-Fahrzeugdarstellung kann dabei insbesondere so erzeugt werden, dass sie eine Darstellung eines ganzen Fahrzeugs umfasst, insbesondere aus einer Perspektive von hinten oben, relativ zur Fahrtrichtung des Ego-Fahrzeugs beziehungsweise des dargestellten Fahrzeugs.

Gemäß einer Ausgestaltung des erfindungsgemäßen Verfahrens wird, wenn anhand des Modusauswahlsignals ein Umschalten zwischen dem ersten und zweiten Modus vorgenommen wird, eine Übergangsanimation erzeugt und ausgegeben. Dadurch kann der Wechsel des aktivierten Modus vorteilhafterweise besonders deutlich ausgegeben werden und der Übergang kann für den Nutzer so erzeugt werden, dass er sich nicht plötzlich in einer andersartig gebildeten Darstellung neu orientieren muss.

Gemäß einer weiteren Ausgestaltung umfasst die Übergangsanimation eine kontinuierliche Vergrößerung der Darstellung, wobei ein virtueller Beobachtungspunkt entgegen der Fahrtrichtung verlagert wird. Dadurch wird vorteilhafterweise eine optische Erweiterung des dargestellten Raums dadurch erreicht, dass der dargestellte Ausschnitt der Fahrbahn entgegen der Fahrtrichtung vergrößert wird.

Eine "Vergrößerung" bezeichnet dabei nicht unbedingt eine reine Veränderung des Maßstabs im Sinne eines "Zoom"-Effekts, sondern insbesondere eine Veränderung der Darstellung so, dass die Darstellung des Ego-Fahrzeugs und die Fahrbahndarstellung eine größere Fläche einnehmen. Dabei ist insbesondere eine Vergrößerung des dargestellten Raums im Bereich des Ego-Fahrzeugs vorgesehen.

Beispielsweise kann dies anhand eines "Ziehens der Straße nach hinten" in eine Richtung in die Anzeigefläche hinein ausgeführt werden. Beispielsweise kann die Darstellung einen weiterer Verkehrsteilnehmer umfassen, dessen Position sich innerhalb der Darstellung in einen weiteren Raum verändert, wobei die dargestellte Fahrbahn "mitgezogen" wird. Ferner kann auf diese Weise der Perspektivenwechsel von einen virtuellen Position oberhalb des Ego-Fahrzeugs zu einer Position in Fahrtrichtung hinter dem Ego-Fahrzeug erzeugt werden. Zudem kann sich die Höhe des virtuellen Ausgangspunktes der dargestellten Perspektive verändern, beispielsweise durch Absenken des Ausgangspunktes und/oder Verändern des virtuellen Betrachtungswinkels relativ zur Fahrbahn.

Gemäß einer Weiterbildung umfasst die Übergangsanimation eine Bewegung eines grafischen Objekts von dem äußeren Bereich der Anzeigefläche in Richtung der Darstellung der Fahrbahn. Dadurch wird vorteilhafterweise das Hinzufügen von weiteren Informationselementen für den Fahrer leicht und schnell erfassbar ausgegeben.

Beispielweise kann ein "Einfliegen" der Straße und/oder weiterer dargestellter Merkmale aus einer oder mehreren Richtungen dargestellt werden. Beispielsweise können Fahrspuren, die im zweiten Modus gegenüber dem ersten Modus zusätzlich dargestellt werden, von unten, oben oder von ihrer jeweiligen Seite relativ zur Darstellung des Ego-Fahrzeugs zu der dargestellten eigenen Fahrspur dargestellt werden.

Gemäß einer Ausgestaltung umfasst die Übergangsanimation eine kontinuierliche Verlängerung der dargestellten vor dem Fahrzeug liegenden Fahrbahn. Dadurch kann vorteilhafterweise eine Erweiterung des im zweiten Modus dargestellten Raums gegenüber dem ersten Modus leicht erfassbar ausgegeben werden.

Beispielsweise kann dabei ein virtueller Beobachtungspunkt entgegen der Fahrtrichtung verlagert werden, was einer Verlagerung des virtuellen Ausgangspunkts nach hinter gegenüber dem Ego-Fahrzeug entspricht. Ferner kann ein "Wachsen der Straße nach hinten" ausgegeben werden, insbesondere eine Verlängerung in Fahrtrichtung. Dadurch wird insbesondere eine Vergrößerung des sichtbaren Bereichs im Sinne einer "Sichtweite" dargestellt.

Gemäß einer weiteren Ausgestaltung werden ferner Fahrbahndaten über einen vor dem Fahrzeug liegenden Fahrbahnverlauf erfasst und die Darstellung der Fahrbahn wird anhand der Fahrbahndaten erzeugt. Dadurch können vorteilhafterweise die Grafikdaten so erzeugt werden, dass sie an die tatsächliche Situation angeglichen werden.

Die Fahrbahndaten können auf an sich bekannte Weise erfasst werden, beispielsweise mittels Daten eines Navigationsgeräts. Beispielsweise können eine vor dem Fahrzeug liegende Kurve und ein Kurvenverlauf anhand der Daten des Navigationsgeräts erfasst werden, ferner können Eigenschaften einer solchen Kurve erfasst werden. Dazu kann insbesondere die Position des Fahrzeugs erfasst und zum Erfassen der Fahrbahndaten verwendet werden.

Ferner können Sensoren wie eine Kamera oder ein Laserscanner zum Erfassen der Fahrbahndaten verwendet werden. Beispielsweise kann auf diese Weise ein Kurvenverlauf bestimmt werden und/oder es können weitere fahrtrelevante Eigenschaften der Fahrbahn und/oder der Umgebung des Fahrzeugs bestimmt werden, etwa Hindernisse, Verkehrszeichen, Bauwerke oder weitere Verkehrsteilnehmer.

Insbesondere kann in dem zweiten Modus die Darstellung so erfolgen, dass gegenüber dem ersten Modus weitere Details dargestellt werden und insbesondere eine Kurvendarstellung mit einem geringeren Abstraktionsgrad erfolgt. Beispielsweise kann dabei die Richtung der Kurve und/oder ihre Krümmung berücksichtigt werden. Alternativ kann unabhängig von dem tatsächlichen genauen Verlauf der Kurve ein Kurvensymbol angezeigt werden. Dabei kann die Kurve als Ganzes eingeblendet werden oder es kann bei der Übergangsanimation eine Verlängerung der Fahrbahn in Fahrtrichtung nach vorne dargestellt werden, wobei die Verlängerung dem Kurvenverlauf folgt.

Ferner können weitere Eigenschaften der Fahrbahn von der Darstellung umfasst sein, etwa ein Straßenbelag, Markierungen, Verkehrszeichen und/oder weitere Eigenschaften.

Gemäß einer Weiterbildung umfasst die Darstellung, wenn der erste Modus aktiviert ist, zweidimensional dargestellte Elemente, das heißt, insbesondere werden die Elemente nicht perspektivisch dargestellt. Dadurch wird vorteilhafterweise eine besonders schnell erfassbare Darstellung erreicht.

Insbesondere kann im ersten Modus die Darstellung der Fahrbahn und des Ego-Fahrzeugs kleiner erfolgen als in dem zweiten Modus. Indem für den ersten Modus eine zweidimensionale Darstellung gewählt wird, können die relevanten Elemente in besonders einfacher Weise angeordnet werden und für den Nutzer erfassbar sein. Insbesondere wird dabei eine flach erscheinende Darstellung gewählt, in der die dargestellten Elemente sämtlich einer Ebene der Darstellung zugeordnet sind.

Gemäß einer weiteren Ausgestaltung umfasst die Darstellung, wenn der zweite Modus aktiviert ist, dreidimensional dargestellte Elemente. Dabei wird insbesondere eine perspektivische Darstellung vorgenommen. Dadurch kann die Informationsdichte vorteilhafterweise erhöht werden.

Beispielsweise kann die dreidimensionale Darstellung perspektiv so gebildet werden, dass eine Anordnung der dargestellten Objekte hintereinander deutlich wird. Beispielsweise können auf diese Weise auch Abstände und die relative räumliche Anordnung von fahrtrelevanten Objekten auf der Fahrbahn, insbesondere weiterer Verkehrsteilnehmer, deutlich gemacht werden.

Falls die Darstellung im ersten Modus zweidimensional und im zweiten Modus dreidimensional erfolgt, kann die Übergangsanimation beim Wechsel zwischen den Modi insbesondere eine Darstellung einer Klappbewegung umfassen, wobei insbesondere die dargestellte Fahrbahn "in die Anzeigefläche hinein" klappt und einen sich nach hinten erstreckenden Verlauf einnimmt. Umgekehrt kann die Darstellung des Übergangs von dem zweiten zu dem ersten Modus gebildet werden.

Es kann ferner vorgesehen sein, dass im ersten und im zweiten Modus hinsichtlich der Zwei- oder Dreidimensionalität gleichartige Darstellungen erzeugt werden. Dadurch kann das Umschalten zwischen den Modi vereinfacht werden, da kein Wechsel mit verschiedendimensionalen Darstellungen dargestellt werden muss.

Gemäß einer weiteren Ausbildung umfasst die Darstellung zumindest ein grafisches Längssteuerungselement, wobei das Längssteuerungselement einer Funktion des Fahrerassistenzsystems zugeordnet ist, welche auf die Steuerung des Fahrzeugs in Längsrichtung bezogenen ist. Dadurch können vorteilhafterweise Ausgabedaten eines Fahrerassistenzsystems angezeigt werden, das auf die Längssteuerung des Fahrzeugs einwirkt oder dem Fahrer entsprechende Hinweise ausgibt.

Die Längssteuerung betrifft dabei insbesondere die Geschwindigkeit und Beschleunigung des Fahrzeugs in Fahrtrichtung. Das grafische Längssteuerungselement kann dabei auf an sich bekannte Art und Weise gebildet werden. Beispielsweise kann ein Abstand zu einem vorausfahrendes Fahrzeug angezeigt werden, wobei Linien in Fahrtrichtung oder quer zur Fahrtrichtung angezeigt werden. Ferner kann eine Fläche im Bereich der darstellten Fahrbahn dargestellt werden. Ferner kann das Längssteuerungselement eine Pfeilform oder eine Lauflicht mit einem dynamischen Effekt umfassen.

Gemäß einer Weiterbildung umfasst die Darstellung zumindest ein grafisches Quersteuerungselement, wobei das Quersteuerungselement einer Funktion des Fahrerassistenzsystems zugeordnet ist, welche auf die Steuerung des Fahrzeugs in Querrichtung bezogenen ist. Dadurch können vorteilhafterweise Ausgabedaten eines Fahrerassistenzsystems angezeigt werden, das auf die Quersteuerung des Fahrzeugs einwirkt oder dem Fahrer entsprechende Hinweise ausgibt.

Dabei ist die Querrichtung insbesondere senkrecht zur Längsrichtung relativ zur Fahrtrichtung des Fahrzeugs definiert. Beispielsweise können dabei Fahrbahnmarkierungen im Bereich der dargestellten Fahrbahn ausgebildet sein, etwa durchgezogene oder gestrichelte Linien. Ferner können Bereiche der Fahrbahn mittels eines flächigen Elements gestaltet sein. Ferner kann die Gestaltung solcher Elemente verändert werden, beispielsweise um eine Warnung oder Informationen über einen automatischen Eingriff auszugeben. Beispielsweise kann eine seitliche Begrenzung, insbesondere eine Fahrbahnmarkierung, in verschiedenen Farben, wie etwa Weiß, Blau, Rot und/oder Grün, dargestellt werden, je nachdem ob eine Maßnahme bezüglich der Steuerung in Querrichtung relativ zu der Begrenzung angezeigt werden soll. Ferner können weitere Fahrzeuge auf einer Nachbarfahrspur dargestellt werden, wobei die Darstellung insbesondere mit einem bestimmten Abstraktionsgrad erfolgt.

Insbesondere kann dabei vorgesehen sein, dass eine "Schutzschildmetapher" verwendet wird, bei der um die Darstellung der Ego-Fahrzeugs herum ein Grafikelement verläuft, das ganz oder teilweise hervorgehoben dargestellt wird. Die Hervorhebung kann dabei so gebildet werden, dass durch sie ausgegeben wird, in welchen Bereichen relativ zur Darstellung des Ego-Fahrzeugs eine Maßnahme angezeigt wird oder eine Gefährdung vorliegen kann. Beispielsweise kann das Ego-Fahrzeug im Bereich eines Rundinstrumentes angezeigt werden und um das Ego-Fahrzeug herum kann ein rundes Grafikelement dargestellt werden. Wenn eine Maßnahme für die Längssteuerung angezeigt werden soll, etwa beim Näherkommen gegenüber einem Hindernis, wird etwa ein oberes Segment des Grafikelements hervorgehoben, um die Aufmerksamkeit des Fahrers nach vorne zu lenken. Ferner kann, wenn eine seitliche Maßnahme angezeigt werden soll, ein Segment auf der entsprechenden Seite des Grafikelements hervorgehoben werden. Das Grafikelement kann vollständig angezeigt werden, wobei ein Kontrast zwischen hervorgehobenen und nicht hervorgehobenen Segmenten gebildet wird, oder es kann stets nur das hervorgehobene Segment angezeigt werden.

Gemäß einer Ausbildung umfassen die Ausgabedaten des Fahrerassistenzsystems Informationen über einen automatischen Eingriff in die Steuerung der Bewegung des Fahrzeugs und die Darstellung wird in Abhängigkeit von dem automatischen Eingriff verändert. Dadurch kann vorteilhafterweise eine Ausgabe besonders relevanter Informationen für den Fahrer des Fahrzeugs erfolgen. Der automatische Eingriff betrifft insbesondere die Längsrichtung und/oder Querrichtung relativ zur Fahrtrichtung des Fahrzeugs.

Gemäß einer weiteren Ausbildung umfasst das Fahrerassistenzsystem einen Spurhalteassistenten, einen Überholassistenten und/oder einen Abstandsassistenten. Dies erlaubt vorteilhafterweise die Verwendung des Informationssystems mit besonders wichtigen Systemen. Alternativ oder zusätzlich kann ferner beispielsweise ein Frontassistent und/oder ein Rechtsüberholverhinderer vorgesehen sein.

Der Spurhalteassistent dient dabei dazu sicherzustellen, dass das Fahrzeug nicht von der Fahrspur abkommt. Insbesondere kann dabei eine Ausgabe oder Warnung erzeugt werden, wenn sich das Fahrzeug auf den Rand einer Fahrspur zubewegt oder diesen überfährt. Ferner kann ein automatischer Eingriff erfolgen, insbesondere in die Quersteuerung des Fahrzeugs.

Bei einem Überholassistenten kann die Sicherheit eines Überholmanövers anhand verschiedener relevanter Daten bestimmt und ausgegeben werden, wobei beispielsweise andere Verkehrsteilnehmer und die Geschwindigkeit berücksichtig werden können. Ferner kann auch hier eine teilweise oder vollständig automatische Steuerung der Bewegung des Fahrzeugs vorgesehen sein.

Bei einem Abstandsassistenten wird der Abstand des Fahrzeugs zu anderen Verkehrsteilnehmern, insbesondere der Abstand zu einem vorausfahrenden Fahrzeug, geregelt und die Geschwindigkeit des Fahrzeugs entsprechend angepasst, um einen ausreichenden Sicherheitsabstand zu gewährleisten.

Eine Frontassistent kann zudem verschiedene Parameter der Fahrt regeln, die einen Bereich in der vorderen Umgebung des Fahrzeugs betreffen. Insbesondere betrifft dies den Abstand zu anderen Fahrzeugen.

Bei einem Rechtsüberholverhinderer kann vorgesehen sein, dass durch das Fahrerassistenzsystem verhindert wird, dass das Fahrzeug einen anderen Verkehrsteilnehmer rechts überholt, wobei in Gegenden mit Linksverkehr ein entsprechender Linksüberholverhinderer vorgesehen sein kann. Die Steuerung kann dabei insbesondere abhängig von der Geschwindigkeit erfolgen und es kann eine Warnung für den Fahrer des Fahrzeugs ausgegeben werden.

Das erfindungsgemäße Informationssystem wird durch den Gegenstand des Anspruchs 11 definiert.

Das erfindungsgemäße Informationssystem ist insbesondere ausgebildet, das vorstehend beschriebene erfindungsgemäße Verfahren zu implementieren. Das Informationssystem weist somit dieselben Vorteile auf wie das erfindungsgemäße Verfahren.

Bei einer Weiterbildung des erfindungsgemäßen Informationssystems umfassen die Ausgabedaten des Fahrerassistenzsystems Informationen über einen automatischen Eingriff in die Steuerung der Bewegung des Fahrzeugs und die Darstellung ist in Abhängigkeit von dem automatischen Eingriff veränderbar ist. Dabei werden insbesondere Eingriffe in die Steuerung des Fahrzeugs in Längs- und/oder Querrichtung angezeigt. Dadurch wird vorteilhafterweise sichergestellt, dass der Fahrer relevante Informationen über die Fahrzeugsteuerung erfassen kann.

Dazu ist insbesondere vorgesehen, dass ein automatischer Eingriffe des Fahrerassistenzsystems in die Steuerung des Fahrzeugs möglich ist, wobei insbesondere eine Schnittstelle zu Einrichtungen zur Steuerung des Fahrzeugs vorgesehen ist. Über diese Schnittstelle können etwa Steuersignale an eine Lenkung und/oder Steuerung der Geschwindigkeit übertragen werden. Insbesondere erfolgt eine Anzeige beim Durchführen des automatischen Eingriffs und/oder eine weitere Anzeige eines Warnhinweises.

Das erfindungsgemäße Fahrzeug umfasst ein Informationssystem, wie es vorstehend beschrieben wurde. Das Informationssystem wird dadurch vorteilhafterweise in einer besonders relevanten Umgebung verwendet, um wichtige Informationen auszugeben.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Informationssystems,
- Figuren 2A bis 2D: zeigen Beispiele von Anzeigen, die mittels eines Ausführungsbeispiels des erfindungsgemäßen Verfahrens erzeugt wurden,
- Figuren 3A und 3B: zeigen ein Ausführungsbeispiel eines Übergangs zwischen dem ersten und dem zweiten Modus,
- Figuren 4A bis 4C: zeigen ein weiteres Ausführungsbeispiel eines Übergangs zwischen dem ersten und dem zweiten Modus und
- Figur 5: zeigt ein Ausführungsbeispiel einer Anzeige unter Berücksichtigung eines Fahrzeugs auf einer benachbarten Fahrspur.

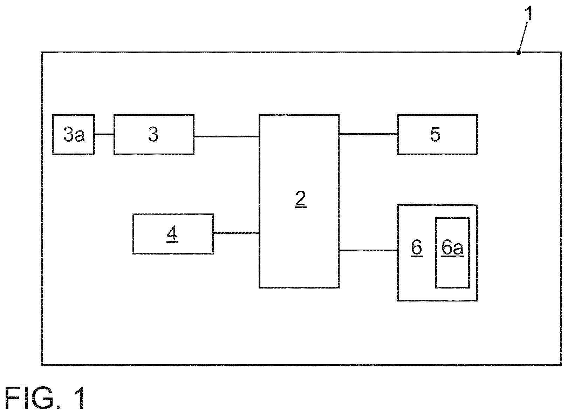

Mit Bezug zu Figur 1 wird ein Fahrzeug mit einem Ausführungsbeispiel des erfindungsgemäßen Informationssystems erläutert.

Ein Fahrzeug 1 umfasst eine Steuereinheit 2, die mit einer Erfassungseinheit 3 gekoppelt ist, welche wiederum mit einem Tastschalter 3a gekoppelt ist. Die Steuereinheit 2 ist ferner mit einem Fahrerassistenzsystem 4 gekoppelt sowie mit einer Grafikeinheit 5 und einer Ausgabeeinheit 6. Die Ausgabeeinheit 6 umfasst zudem eine Anzeigefläche 6a. Die Anzeigefläche 6a ist im dargestellten Beispiel ein freiprogrammierbares Kombiinstrument, das nach an sich bekannter Weise leicht unterhalb des typischen Sichtfeldes eines Fahrers des Fahrzeugs 1 angeordnet ist.

Das Fahrerassistenzsystem 4 umfasst in dem Ausführungsbeispiel einen Spurhalteassistenten, einen Frontassistenten und einen Rechtsüberholverhinderer. Dabei wird durch den Spurhalteassistenten eine Warnmeldung ausgegeben, wenn das Fahrzeug 1 die Fahrbahnmarkierung des aktuell befahrenen Fahrstreifens überfährt. Ferner wird mittels des Frontassistenten durch Eingriffe in die Längssteuerung des Fahrzeugs 1 sichergestellt, dass stets ein ausreichender Sicherheitsabstand zu einem vorausfahrenden weiteren Fahrzeug eingehalten wird. Der Rechtsüberholverhinderer erkennt anhand von Daten, die durch die Erfassungseinheit 3 in der Umgebung des Fahrzeugs 1 erfasst werden, wenn das Fahrzeug 1 im Begriff ist, ein weiteres Fahrzeug rechts zu überholen. Oberhalb einer bestimmten Geschwindigkeit wird in dieser Situation die Geschwindigkeit des Fahrzeugs 1 automatisch verringert, um ein Rechtsüberholen zu vermeiden. In weiteren Ausführungsbeispielen sind alternativ oder zusätzlich andere Funktionen des Fahrerassistenzsystems 4 vorgesehen.

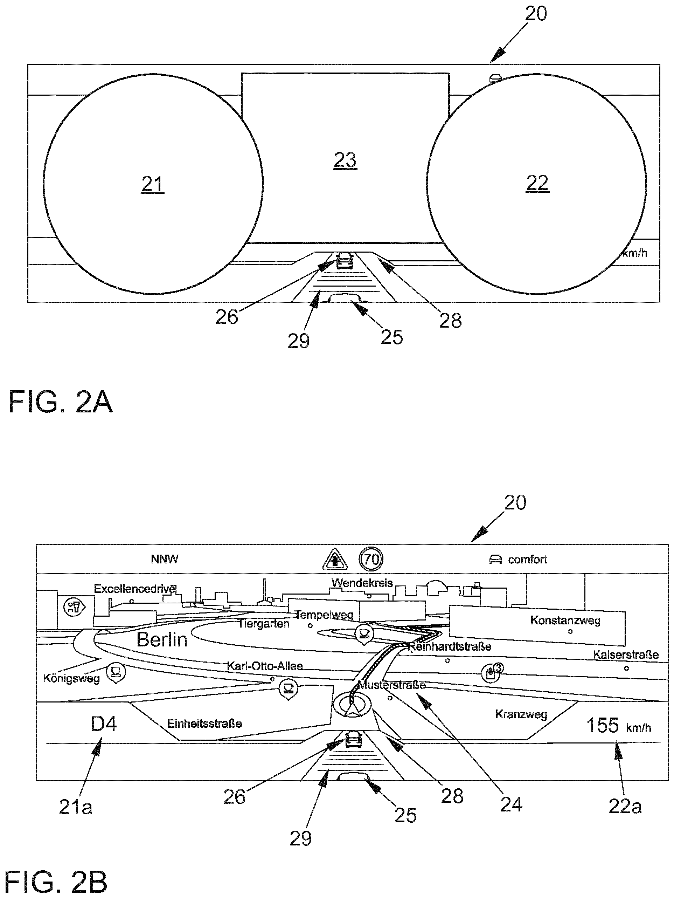

Anhand der Figuren 2A bis 2D wird ein Ausführungsbeispiel des erfindungsgemäßen Verfahrens erläutert. Dabei wird von dem oben mit Bezug zu Figur 1 beschriebenen Informationssystem ausgegangen.

Durch das Fahrerassistenzsystem 4 des Fahrzeugs 1 werden Ausgabedaten erzeugt, die Informationen über die Tätigkeit des Fahrerassistenzsystems 4 umfassen. Die Ausgabedaten können sich abhängig von der jeweils betroffenen Funktion des Fahrerassistenzsystems 4 unterscheiden, beispielsweise kann ein Warnhinweise vor dem Überfahren einer Fahrbahnmarkierung ausgegeben werden oder es kann darüber informiert werden, dass ein Rechtsüberholen durch automatisches Vermindern der Fahrzeuggeschwindigkeit vermieden wird.

Die Ausgabedaten werden an die Steuereinheit 2 und von dort an die Grafikeinheit 5 übertragen. Diese erzeugt Grafikdaten einer Darstellung 20, die schließlich mittels der Anzeigefläche 6a der Ausgabeeinheit 6 ausgegeben wird. Dabei wird in dem Beispiel ein Kombiinstrument genutzt, in weiteren Ausführungsbeispielen können aber alternativ oder zusätzlich andere Einrichtungen des Fahrzeugs 1 zur Ausgabe genutzt werden.

Das Informationssystem weist dabei zwei Modi auf, wobei in weiteren Ausführungsbeispielen mehr Modi vorgesehen sein können. Zwischen den Modi kann ein Nutzer durch Betätigen des Tastschalters 3a umschalten. In weiteren Ausführungsbeispielen kann eine andere Eingabemöglichkeit vorgesehen sein, etwa ein Schalthebel oder eine Schaltfläche einer grafischen Bedienoberfläche. Ferner kann eine automatische Umschaltung vorgesehen sein, insbesondere kann durch das Fahrerassistenzsystem 4 ein Modusauswahlsignal erzeugt werden, wenn eine bestimmte vorgegebene Bedingung erfüllt ist, etwa ein bestimmtes Ereignis registriert wird.

Die Darstellung 20 wird in Abhängigkeit von dem Modus des Informationssystems erzeugt. Insbesondere wird im ersten Modus ein verkleinerte und im zweiten Modus eine vergrößerte Darstellung der Ausgabedaten des Fahrerassistenzsystems 4 angezeigt.

Wie in Figur 2A gezeigt, kann die Darstellung 20 zwei Rundinstrumente 21, 22 umfassen, die rechts und links auf der rechteckigen Anzeigefläche 6a angeordnet sind. Diese dienen der Ausgabe von Geschwindigkeit und Drehzahl des Motors nach an sich bekannter Art. In weiteren Ausführungsbeispielen können andere Informationen ausgegeben werden. Die Darstellung 20 umfasst ferner einen Informationsbereich 23, der zwischen den Rundinstrumenten 21, 22 angeordnet ist und sich vom oberen Rand der Anzeigefläche 6a bis über die Mitte hinaus erstreckt.

In einem unteren Bereich zwischen den Rundinstrumenten 21, 22 wird eine Darstellung einer Fahrspur 29 ausgegeben, wobei die Fahrbahndarstellung 29 quer zu ihrer Längserstreckung verlaufende Linien aufweist. Ferner ist auf der Fahrspur 29 ein vorausfahrendes Fahrzeug 26 dargestellt. Am oberen Ende des dargestellten Fahrspurabschnitts wird eine Auskragung 28 einer Linie quer über den unteren Bereich der Darstellung 20 dargestellt, wobei eine Breite von mehr als der Breite der dargestellten Fahrspur 29 angezeigt wird. Auf diese Weise kann angedeutet werden, dass neben der eigenen Fahrspur 29 auch benachbarte Fahrspuren verlaufen. Ferner wird am unteren Rand ein vorderer Teil eines Ego-Fahrzeugs 25 dargestellt, der virtuelle Ausgangspunkt der dargestellten Sicht befindet sich also über dem Ego-Fahrzeug 25.

In dem Ausführungsbeispiel ist eine dreidimensionale Darstellung vorgesehen, das heißt, mittels perspektivischer Darstellung wird ein Tiefeneffekt erzeugt, bei dem ein Verlauf der Fahrbahndarstellung 29 in die Ebene der Anzeigefläche 6a hinein dargestellt wird. In weiteren Beispielen kann die Darstellung zweidimensional ausgebildet sein.

Eine weitere beispielhafte Darstellung 20 für den ersten Modus wird in Figur 2B gezeigt, wobei hier die Rundinstrumente 21, 22 nicht mehr dargestellt sind. Stattdessen werden Kurzinformationen 21a, 22a angezeigt, die eine Geschwindigkeit und einen eingelegten Gang des Fahrzeugs 1 als Textmeldung ausgeben. Ferner ist der Informationsbereich 23 nicht von der Darstellung 20 umfasst. Die Darstellung 20 umfasst hierbei eine große Navigationsanzeige 24, die einen großen Teil der Fläche der Darstellung 20 einnimmt. Die Darstellung der Fahrbahn 29, des vorderen Teils des Ego-Fahrzeugs 25 sowie der weiteren damit verbundenen Elemente erfolgt wie in Figur 2A gezeigt.

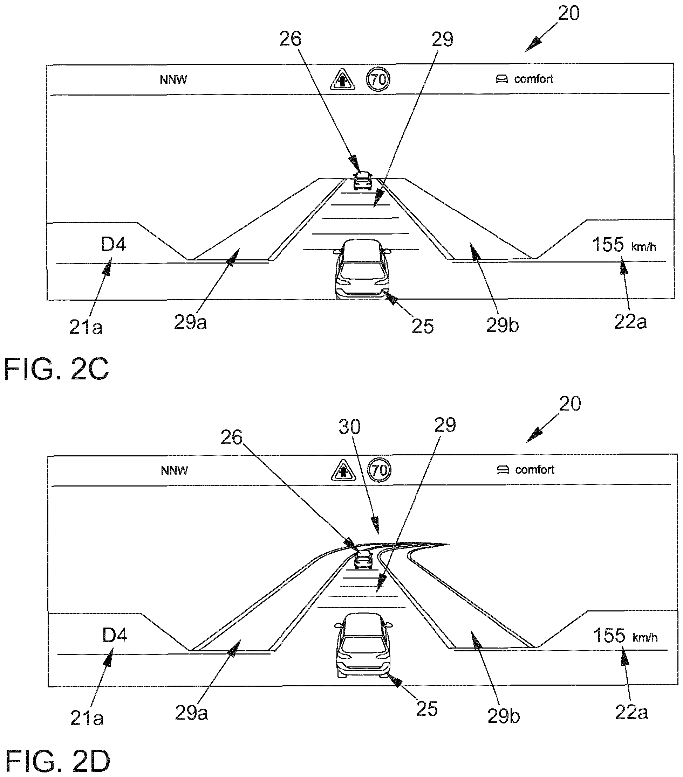

Die Figuren 2C und 2D zeigen ein Beispiel eines Übergangs der Darstellung 20 zu dem Fall, dass der zweite Modus des Informationssystems aktiviert ist. Die Fahrbahndarstellung 29 wird hier gegenüber den in den Figuren 2A und 2B gezeigten Fällen vergrößert. Dabei wird die insgesamt von diesem Teil der Darstellung 20 eingenommene Fläche vergrößert und der virtuelle Ausgangspunkt wird gesenkt und gegen die Fahrtrichtung nach hinten verschoben. Das heißt, die Darstellung des Ego-Fahrzeugs 25 erfolgt nunmehr so, dass eine rückwärtige Fahrzeugansicht dargestellt wird. Ferner werden die Nachbarfahrspuren 29a, 29b deutlicher als flächige Elemente rechts und links relativ zur Fahrspur 29 des Ego-Fahrzeugs 25 dargestellt.

Figur 2C zeigt eine Zwischenstufe beim Übergang der Darstellung 20 zu dem zweiten Modus. Dabei ist erkennbar, dass das Fahrzeug 25 hier noch nicht vollständig dargestellt ist, während es in Figur 2D vollständig aus der Rückansicht erkennbar ist. Dabei kann die Darstellung des Ego-Fahrzeugs 25 in verschiedenen Stufen der Abstraktion erfolgen, wobei das tatsächliche Aussehen des Fahrzeugs 1 mehr oder weniger genau dargestellt wird.

Im Schritt von dem in Figur 2C dargestellten Zwischenschritt zur Darstellung in Figur 2D wird der Verlauf der Fahrbahn 29 nach vorne weiter ausgeführt, wobei ein perspektivischer Eindruck erzeugt wird, bei dem sich die Fahrbahn 29 in die Anzeigeebene hinein erstreckt. Der Verlauf der Fahrbahn 29 weist in dem gezeigten Fall eine Kurve auf, deren Darstellung 30 an die Fahrbahn 29 anschließt. In dem dargestellten Ausführungsbeispiel wird der Kurvenverlauf abstrahiert gezeigt, das heißt, die Darstellung 20 ist unabhängig von der Krümmung, Richtung und anderen genauen Ausgestaltungen des Kurvenverlaufs. In weiteren Ausführungsbeispielen kann vorgesehen sein, dass Informationen über den tatsächlichen Kurvenverlauf erfasst und bei der Darstellung berücksichtigt werden, beispielsweise mittels Informationen von einem Navigationssystem und/oder von fahrzeugeigenen Sensoren wie einer Kamera oder einem Laserscanner.

Der Übergang von einer Darstellung 20 des ersten Modus, wie in den Figuren 2A und 2B dargestellt, zu dem zweiten Modus, wie in Figur 2D dargestellt, kann auf verschiedene Weise erfolgen. Bei dem hier gezeigten Ausführungsbeispiel wird eine Übergangsanimation so erzeugt, dass ein kontinuierliches "Wachsen" dargestellt wird, insbesondere in Verbindung mit einer Verlagerung des virtuellen Ausgangspunktes der Betrachtung und des Betrachtungswinkels. Insbesondere wird dabei das Wachsen der Fahrbahndarstellung 29 so ausgeführt, dass sich die Positionen des dargestellten Ego-Fahrzeugs 25 und des vorausfahrenden Fahrzeugs 26 nach vorne verschieben und gleichzeitig dazu die Fahrbahndarstellung 29 in Fahrtrichtung nach vorne "gezogen" wird. In gleichem Maße wird eine Vergrößerung der Fahrbahn dargestellt und auch die auf der Fahrbahn 29 dargestellten Markierungen eines Fahrerassistenzsystems, in diesem Fall Linien quer zur Fahrtrichtung, welche die Tätigkeit eines Frontassistenten anzeigen, wachsen in gleichem Maße. Ferner erwachsen die Darstellungen der Nachbarspuren 29a, 29b aus der zuvor mittels der Auskragung 28 angedeuteten Darstellung.

Die Darstellung der Kurve 30 wird erzeugt, indem die kontinuierliche Verlängerung der dargestellten Fahrbahn 29 fortgesetzt wird, oder die Kurve erscheint mit einem Mal nach dem Ende der Erweiterung der Fahrbahn 29, wobei ein plötzliches Auftauchen dargestellt wird.

Die Animation kann bei einem Wechsel von dem zweiten zu dem ersten Modus insbesondere umgekehrt gebildet werden. Dabei wird bei dem Ausführungsbeispiel eine Verkleinerung der dargestellten Elemente zur Anzeige der Ausgabedaten des Fahrerassistenzsystems 4 vorgenommen.

Die aktiven Funktionen des Fahrerassistenzsystems 4 werden in verschiedener Weise so dargestellt, dass der Fahrer des Fahrzeugs 1 ihre Tätigkeit der Darstellung entnehmen kann. Insbesondere ist vorgesehen, dass die Darstellung der jeweils entsprechenden Elemente bei einem Eingriff des Fahrerassistenzsystems 4 verändert wird. In Abhängigkeit von der Tätigkeit des Frontassistenten werden etwa Linien oder Flächen als Längssteuerungselemente zwischen der Darstellung des Ego-Fahrzeugs 25 und dem vorausfahrenden Fahrzeug 26 in verschiedener Weise dargestellt. Beispielsweise können die auf der Fahrbahn 29 dargestellten Linien in verschiedener Anzahl, Dicke, Farbe und Helligkeit erzeugt werden, je nachdem, ob der tatsächliche Abstand des Fahrzeugs 1 zu einem vorausfahrenden Fahrzeug kleiner oder größer ist und ob Maßnahmen zur Veränderung des Abstandes durchgeführt werden, wobei insbesondere ein Eingriff in die Längssteuerung des Fahrzeugs 1, etwa eine Geschwindigkeitsveränderung, erfolgt.

Ferner können Quersteuerungselemente angezeigt werden, etwa anhand der Nachbarfahrspuren 29a, 29b sowie der dargestellten Fahrbahnmarkierungen und Fahrspurbegrenzungen. Zum Beispiel kann vorgesehen sein, dass eine Nachbarfahrspur in einer bestimmten Weise dargestellt wird, etwa mit einer bestimmten Farbe, Intensität oder einem dynamischen Effekt wie Blinken, je nachdem, ob ein Spurwechsel sicher durchgeführt werden könnte. Beispielsweise kann auf diese Weise angezeigt werden, dass eine der Nachbarfahrspuren durch ein dort fahrendes Fahrzeug besetzt ist und ein Fahrspurwechsel mit einer Kollisionsgefahr verbunden wäre. Ferner können dem Fahrer des Fahrzeugs 1 auf diese Weise auch Wechselwirkungen mit der Längssteuerung dargestellt werden, etwa wenn bei einem Rechtüberholverhinderer die Geschwindigkeit des Fahrzeugs 1 verringert wird, um ein Überholen eines Fahrzeugs auf einer linken Nachbarspur 29a zu vermeiden. Der Fahrer kann so besser erfassen, aus welchen Gründen ein bestimmter Eingriff in die Quersteuerung des Fahrzeugs erfolgt.

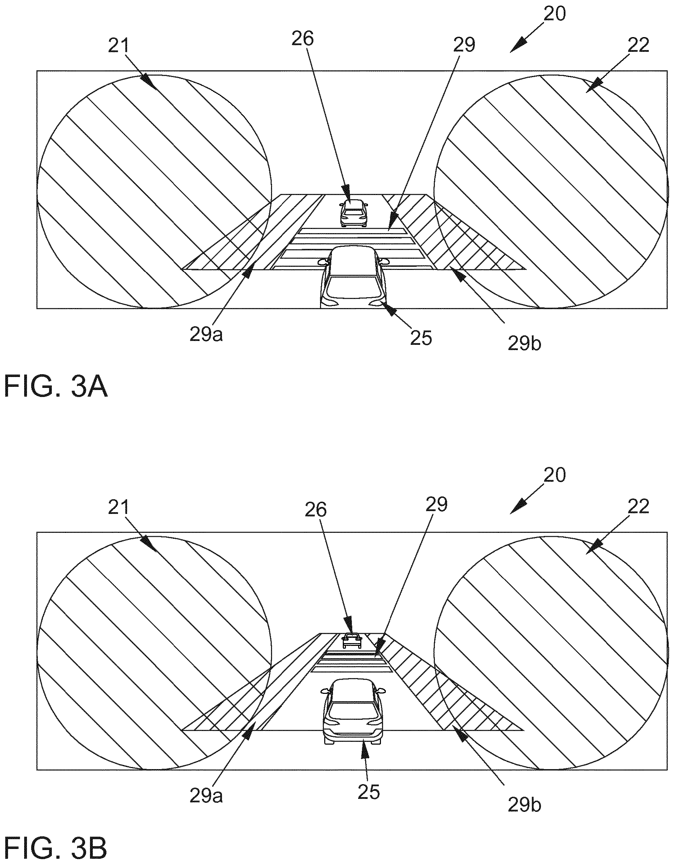

Mit Bezug zu den Figuren 3A und 3B wird ein Ausführungsbeispiel eines Übergangs zwischen dem ersten und dem zweiten Modus erläutert. Dabei wird von dem oben mit Bezug zu Figur 1 beschriebenen Informationssystem ausgegangen. Ferner wird von einer Darstellung 20 im ersten Modus ausgegangen, etwa nach Art der Figuren 2A und 2B.

Figur 3A zeigt dabei, ähnlich wie Figur 2C, die Darstellung 20 in einem Übergangsstadium beim Wechsel zum zweiten Modus. Im Unterschied zu Figur 2C umfasst die Darstellung 20 hier jedoch die beiden Rundinstrumente 21, 22. Es wird eine Verlängerung der Fahrbahn 29 und eine Vergrößerung der von der Darstellung eingenommenen Fläche dargestellt, wobei die Nachbarspuren 29a, 29b deutlicher hervortreten und durch eigene Flächenelemente dargestellt werden.

Beim Erreichen des in Figur 3B gezeigten Zustands, ist der Wechsel in den zweiten Modus beendet, die Fahrbahndarstellung 29 hat ihre maximal dargestellte Ausdehnung in Fahrtrichtung erreicht und das vorausfahrende Fahrzeug 26 ist am Ende der vor dem Ego-Fahrzeug 25 dargestellten Fahrbahn 29 angeordnet.

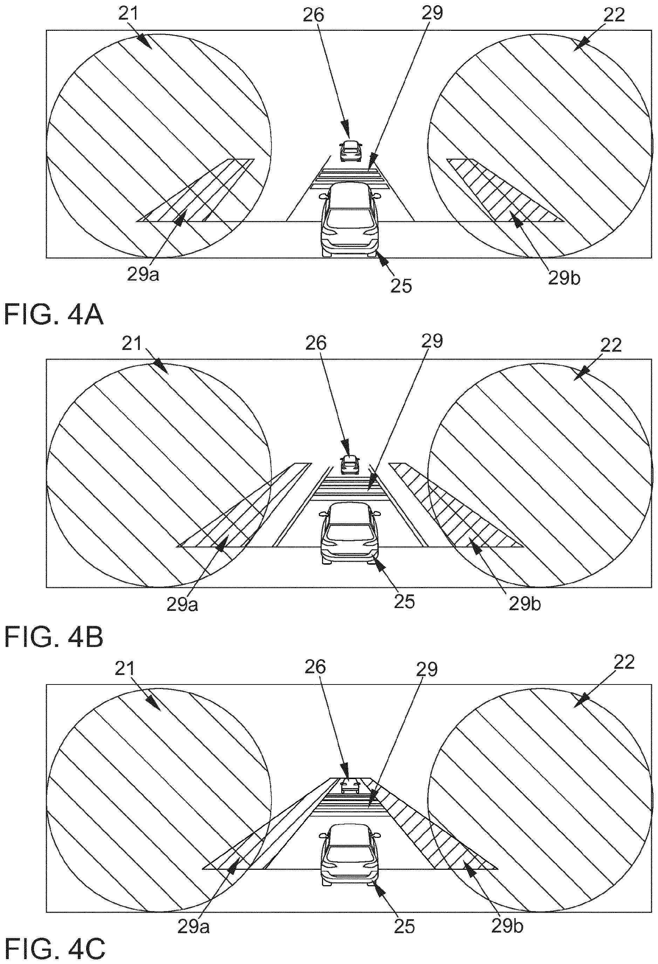

Mit Bezug zu den Figuren 4A bis 4C wird ein weiteres Ausführungsbeispiel eines Übergangs zwischen dem ersten und dem zweiten Modus erläutert. Auch hierbei wird von dem oben mit Bezug zu Figur 1 beschriebenen Informationssystem ausgegangen und es wird von einer Darstellung 20 im ersten Modus ausgegangen, etwa nach Art der Figuren 2A und 2B.

Der Übergang wird hier so dargestellt, dass die Nachbarspuren 29a, 29b von ihrer jeweiligen Seite her auf die Fahrbahndarstellung 29 hin bewegt werden. Auf diese Weise wird ein "Einfliegen" und Zusammensetzen der neuen Darstellung 20 im zweiten Modus dargestellt, der dem Fahrer signalisiert, dass weitere Informationselemente hinzugefügt werden.

In weiteren Ausführungsbeispielen können mit analogen Mitteln alternativ oder zusätzlich andere Elemente hinzugefügt werden, wobei die Bewegung der hinzugefügten Elemente auf verschiedene Weise und insbesondere aus verschiedenen Richtungen erfolgt.

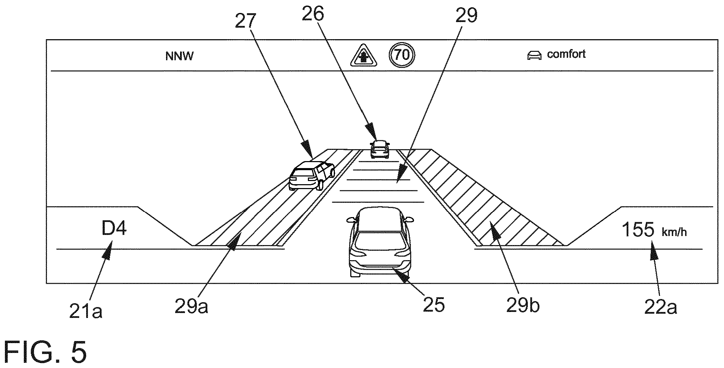

Mit Bezug zu Figur 5 wird ein Ausführungsbeispiel einer Anzeige unter Berücksichtigung eines Fahrzeugs auf einer benachbarten Fahrspur erläutert. Es wird weiterhin von dem oben mit Bezug zu Figur 1 beschriebenen Informationssystem ausgegangen und es wird von einer Darstellung 20 im zweiten Modus ausgegangen, etwa nach Art der Figur 3B.

Im Unterschied zu der in Figur 3B gezeigten Darstellung 20 werden hier keine Rundinstrumente 21, 22, sondern Kurzinformationen 21a, 22a dargestellt, die Auskunft über die Geschwindigkeit und den eingelegten Gang des Fahrzeugs 1 geben. Der Verlauf der dargestellten Fahrbahn 29 ist gerade in die Anzeigeebene hinein und die beiden Nachbarspuren 29a, 29b verlaufen seitlich dazu. Ein Fahrzeug 27 wird auf der linken Nachbarspur 29a dargestellt. Der Fahrer kann somit erkennen, dass beispielsweise die Aktivität des Fahrerassistenzsystems 4 auf die Anwesenheit dieses Fahrzeugs 27 Rücksicht nehmen wird, beispielsweise indem ein Rechtsüberholen vermieden wird oder gegebenenfalls vor einem Fahrspurwechsel gewarnt wird.

In weiteren Ausführungsbeispielen kann vorgesehen sein, dass die Darstellung der Fahrbahn 29, des Ego-Fahrzeuges 25 sowie der weiteren Elemente der Darstellung innerhalb eines Rundinstrumentes 21, 22 erfolgt. Dabei kann insbesondere ein umlaufendes Grafikelement vorgesehen sein, das vollständig oder teilweise hervorgehoben dargestellt werden kann. Auf diese Weise kann ein "Schutzschild"-Symbol gebildet werden, bei dem beispielsweise eine Hervorhebung eines komplett geschlossenen Rings um das Ego-Fahrzeug 25 herum eine sichere Fahrsituation widerspiegelt, während anders hervorgehobene Abschnitt des Rings Positionen oder Bereiche in der Umgebung des Fahrzeugs 1 darstellen, in Bezug auf welche ein Eingreifen des Fahrers und/oder des Fahrerassistenzsystems 4 angebracht scheint.

In weiteren Ausführungsbeispielen können die Darstellungen jeweils zwei- oder dreidimensional erzeugt werden. Ferner können einzelne Elemente der Darstellung zwei- oder dreidimensional dargestellt werden.

Das oben beschriebene Informationssystem und das Verfahren zum Betreiben desselben können in Kombination mit beliebigen weiteren Fahrerassistenzsystemen verwendet werden, wobei die Anzeige auf an sich bekannte Weise ergänzt werden kann, beispielsweise mittels weiterer dargestellter Symbole und/oder Grafikelemente. Ferner kann ergänzend eine Darstellung einer Textnachricht erfolgen, etwa um eine Warnmeldung explizit auszugeben.

### Bezugszeichenliste

- 1: Fahrzeug
- 2: Steuereinheit
- 3: Erfassungseinheit
- 3a: Tastschalter
- 4: Fahrerassistenzsystem
- 5: Grafikeinheit
- 6: Ausgabeeinheit
- 6a: Anzeigefläche
- 20: Darstellung
- 21, 22: Rundinstrument
- 21a, 22a: Kurzinformation
- 23: Informationsbereich
- 24: Navigationsanzeige
- 25: Ego-Fahrzeugdarstellung
- 26: Vorausfahrendes Fahrzeug (Darstellung)
- 27: Fahrzeug auf Nachbarspur (Darstellung)
- 28: Auskragung
- 29: Fahrbahndarstellung; Fahrspur des Ego-Fahrzeugs (Darstellung)
- 29a, 29b: Nachbarfahrspur (Darstellung)
- 30: Kurve (Darstellung)

## Patentansprüche

1. Verfahren zum Betreiben eines Informationssystems, wobei das Informationssystem einen ersten aktivierbaren Modus und einen zweiten aktivierbaren Modus aufweist, wobei bei dem Verfahren
Ausgabedaten eines Fahrerassistenzsystems (4) eines Fahrzeugs (1) erfasst werden,
in Abhängigkeit von dem aktivierten Modus und den Ausgabedaten Grafikdaten einer Darstellung (20) erzeugt und mittels einer Anzeigefläche (6a) ausgegeben werden,
ein Modusauswahlsignal empfangen wird und in Abhängigkeit von dem Modusauswahlsignal der erste oder zweite Modus aktiviert wird, wobei,
die Grafikdaten eine Fahrbahndarstellung (29) einer vor dem Fahrzeug (1) liegenden Fahrbahn und eine Ego-Fahrzeugdarstellung (25) umfassen, wobei,
wenn der erste Modus aktiviert ist, die Ego-Fahrzeugdarstellung (25) eine teilweise Darstellung eines vorderen Fahrzeugteils umfasst und,
wenn der zweite Modus aktiviert ist, die Ego-Fahrzeugdarstellung (25) eine Darstellung einer rückwärtigen Fahrzeugansicht umfasst,
**dadurch gekennzeichnet, dass**
wenn anhand des Modusauswahlsignals ein Umschalten zwischen dem ersten und zweiten Modus vorgenommen wird,
eine Übergangsanimation erzeugt und ausgegeben wird, wobei
die Übergangsanimation eine kontinuierliche Vergrößerung der Darstellung umfasst, wobei ein virtueller Beobachtungspunkt entgegen der Fahrtrichtung verlagert wird.

2. Verfahren gemäß Anspruch 1,
**dadurch gekennzeichnet, dass**
die Übergangsanimation eine Bewegung eines grafischen Objekts (29a, 29b) von dem äußeren Bereich der Anzeigefläche in Richtung der Darstellung der Fahrbahn (29) umfasst.

3. Verfahren gemäß einem der vorhergehenden Ansprüche,
**dadurch gekennzeichnet, dass**
die Übergangsanimation eine kontinuierliche Verlängerung der dargestellten vor dem Fahrzeug (1) liegenden Fahrbahn (29) umfasst.

4. Verfahren gemäß einem der vorhergehenden Ansprüche,
**dadurch gekennzeichnet, dass**
ferner Fahrbahndaten über einen vor dem Fahrzeug (1) liegenden Fahrbahnverlauf erfasst werden und
die Darstellung der Fahrbahn (29) anhand der Fahrbahndaten erzeugt wird.

5. Verfahren gemäß einem der vorhergehenden Ansprüche,
**dadurch gekennzeichnet, dass,**
wenn der erste Modus aktiviert ist, die Darstellung (20) zweidimensional dargestellte Elemente umfasst.

6. Verfahren gemäß einem der vorhergehenden Ansprüche,
**dadurch gekennzeichnet, dass,**
wenn der zweite Modus aktiviert ist, die Darstellung (20) dreidimensional dargestellte Elemente umfasst.

7. Verfahren gemäß einem der vorhergehenden Ansprüche,
**dadurch gekennzeichnet, dass**
die Darstellung (20) zumindest ein grafisches Längssteuerungselement umfasst, wobei das Längssteuerungselement einer Funktion des Fahrerassistenzsystems (4) zugeordnet ist, welche auf die Steuerung des Fahrzeugs (1) in Längsrichtung bezogenen ist.

8. Verfahren gemäß einem der vorhergehenden Ansprüche,
**dadurch gekennzeichnet, dass**
die Darstellung zumindest ein grafisches Quersteuerungselement umfasst, wobei das Quersteuerungselement einer Funktion des Fahrerassistenzsystems (4) zugeordnet ist, welche auf die Steuerung des Fahrzeugs (1) in Querrichtung bezogenen ist.

9. Verfahren gemäß einem der vorhergehenden Ansprüche,
**dadurch gekennzeichnet, dass**
die Ausgabedaten des Fahrerassistenzsystems (4) Informationen über einen automatischen Eingriff in die Steuerung der Bewegung des Fahrzeugs (1) umfassen und die Darstellung (20) in Abhängigkeit von dem automatischen Eingriff verändert wird.

10. Verfahren gemäß einem der vorhergehenden Ansprüche,
**dadurch gekennzeichnet, dass**
das Fahrerassistenzsystem (4) einen Spurhalteassistenten, einen Überholassistenten und/oder einen Abstandsassistenten umfasst.

11. Informationssystem mit einem ersten aktivierbaren Modus und einen zweiten aktivierbaren Modus, wobei das Informationssystem umfasst:
eine Erfassungseinheit (3), durch die Ausgabedaten eines Fahrerassistenzsystems (4) eines Fahrzeugs (1) erfassbar sind;
eine Grafikeinheit (5), durch die in Abhängigkeit von dem aktivierten Modus und den Ausgabedaten Grafikdaten einer Darstellung (20) erzeugbar sind; und
eine Ausgabeeinheit (6) mit einer Anzeigefläche (6a), durch welche die Grafikdaten ausgebbar sind; wobei
durch die Erfassungseinheit (3) ferner ein Modusauswahlsignal empfangbar ist; wobei
in Abhängigkeit von dem Modusauswahlsignal der erste oder zweite Modus aktivierbar ist; wobei
die Grafikdaten eine Fahrbahndarstellung (29) einer vor dem Fahrzeug (1) liegenden Fahrbahn und eine Ego-Fahrzeugdarstellung (10) umfassen, wobei,
wenn der erste Modus aktiviert ist, die Ego-Fahrzeugdarstellung (10) eine teilweise Darstellung eines vorderen Fahrzeugteils umfasst und,
wenn der zweite Modus aktiviert ist, die Ego-Fahrzeugdarstellung (10) eine Darstellung einer rückwärtigen Fahrzeugansicht umfasst,
**dadurch gekennzeichnet, dass**
wenn anhand des Modusauswahlsignals ein Umschalten zwischen dem ersten und zweiten Modus vorgenommen wird,
eine Übergangsanimation erzeugbar und ausgebbar ist, wobei
die Übergangsanimation eine kontinuierliche Vergrößerung der Darstellung umfasst, wobei ein virtueller Beobachtungspunkt entgegen der Fahrtrichtung verlagerbar ist.

12. Informationssystem gemäß Anspruch 11,
**dadurch gekennzeichnet, dass**
die Ausgabedaten des Fahrerassistenzsystems (4) Informationen über einen automatischen Eingriff in die Steuerung der Bewegung des Fahrzeugs (1) umfassen und die Darstellung in Abhängigkeit von dem automatischen Eingriff veränderbar ist.

13. Fahrzeug (1) mit einem Informationssystem gemäß Anspruch 11 oder 12.

## Claims

1. Method for operating an information system, wherein the information system has a first activatable mode and a second activatable mode, wherein in the method:
output data of a driver assistance system (4) of a vehicle (1) are detected,
graphic data of a visualization (20) are generated and output by means of a display surface (6a) depending on the activated mode and the output data,
a mode selection signal is received, and the first or second mode is activated depending on the mode selection signal, wherein
the graphic data comprise a roadway visualization (29) of a roadway lying ahead of the vehicle (1) and an ego vehicle visualization (25), wherein
when the first mode is activated, the ego vehicle visualization (25) comprises a partial visualization of a front vehicle section, and
when the second mode is activated, the ego vehicle visualization (25) comprises a visualization of a rear vehicle view,
**characterized in that**
when switching between the first and second modes is carried out on the basis of the mode selection signal,
a transitional animation is generated and output, wherein
the transitional animation comprises a continuous enlargement of the visualization, wherein a virtual observation point is displaced opposite the direction of travel.

2. Method according to Claim 1,
**characterized in that**
the transitional animation comprises a movement of a graphic object (29a, 29b) from the outer region of the display surface in the direction of the visualization of the roadway (29).

3. Method according to either of the preceding claims,
**characterized in that**
the transitional animation comprises a continuous extension of the visualized roadway (29) lying ahead of the vehicle (1).

4. Method according to any one of the preceding claims,
**characterized in that**
roadway data about a roadway course lying ahead of the vehicle (1) can also be detected, and
the visualization of the roadway (29) is generated on the basis of the roadway data.

5. Method according to any one of the preceding claims,
**characterized in that**
when the first mode is activated, the visualization (20) comprises two-dimensionally visualized elements.

6. Method according to any one of the preceding claims,
**characterized in that**
when the second mode is activated, the visualization (20) comprises three-dimensionally visualized elements.

7. Method according to any one of the preceding claims,
**characterized in that**
the visualization (20) comprises at least one graphic longitudinal control element, wherein the longitudinal control element is assigned to a function of the driver assistance system (4) which is related to the control of the vehicle (1) in the longitudinal direction.

8. Method according to any one of the preceding claims,
**characterized in that**
the visualization comprises at least one graphic transverse control element, wherein the transverse control element is assigned to a function of the driver assistance system (4) which is related to the control of the vehicle (1) in the transverse direction.

9. Method according to any one of the preceding claims,
**characterized in that**
the output data of the driver assistance system (4) comprise information about an automatic intervention in the controlling of the movement of the vehicle (1), and the visualization (20) is changed depending on the automatic intervention.

10. Method according to any one of the preceding claims,
**characterized in that**
the driver assistance system (4) comprises a lane assist, a passing assist and/or a distance assist.

11. Information system having a first activatable mode and a second activatable mode, wherein the information system comprises:
a detection unit (3) by means of which output data of a driver assistance system (4) of a vehicle (1) can be detected;
a graphics unit (5) by means of which graphic data of a visualization (20) can be generated depending on the activated mode and the output data; and
an output unit (6) having a display area (6a) by means of which the graphic data can be output; wherein
a mode selection signal can also be received by the detection unit (3);
wherein
the first or second mode is activatable depending on the mode selection signal; wherein
the graphic data comprise a roadway visualization (29) of a roadway lying ahead of the vehicle (1) and an ego vehicle visualization (10), wherein
when the first mode is activated, the ego vehicle visualization (10) comprises a partial visualization of a front vehicle section, and
when the second mode is activated, the ego vehicle visualization (10) comprises a visualization of a rear vehicle view,
**characterized in that**
when switching between the first and second modes is carried out on the basis of the mode selection signal,
a transitional animation can be generated and output, wherein
the transitional animation comprises a continuous enlargement of the visualization, wherein a virtual observation point can be displaced opposite the direction of travel.

12. Information system according to Claim 11,
**characterized in that**
the output data of the driver assistance system (4) comprise information about an automatic intervention in the controlling of the movement of the vehicle (1), and the visualization can be changed depending on the automatic intervention.

13. Vehicle (1) having an information system according to Claims 11 or 12.

## Revendications

1. Procédé de fonctionnement d'un système d'informations, dans lequel le système d'informations présente un premier mode pouvant être activé et un second mode pouvant être activé, le procédé comprenant
la collecte de données de sortie d'un système d'assistance au conducteur (4) d'un véhicule (1),
la génération, en fonction du mode activé et des données de sortie, de données graphiques d'une représentation (20) et la sortie de celles-ci au moyen d'une surface d'affichage (6a),
la réception d'un signal de sélection de mode et, en fonction du signal de sélection de mode, l'activation du premier ou du second mode,
les données graphiques comprenant une représentation de chaussée (29) d'une chaussée située devant le véhicule (1) et une représentation de véhicule propre (25),
la représentation de véhicule propre (25) comprenant, lorsque le premier mode est activé, une représentation partielle d'une partie avant du véhicule et
la représentation de véhicule propre (25) comprenant, lorsque le second mode est activé, une représentation d'une vue du véhicule arrière,
**caractérisé en ce que**
lorsqu'une commutation entre le premier et le second mode est effectuée au moyen du signal de sélection de mode,
une animation de transition est générée et sortie,
l'animation de transition comprenant un agrandissement continu de la représentation, un point d'observation virtuel étant déplacé dans la direction opposée à la direction de conduite.

2. Procédé selon la revendication 1,
**caractérisé en ce que**
l'animation de transition comprend un mouvement d'un objet graphique (29a, 29b) d'une zone extérieure de la surface d'affichage en direction de la représentation de la chaussée (29).

3. Procédé selon l'une quelconque des revendications précédentes, **caractérisé en ce que**
l'animation de transition comprend un rallongement continu de la chaussée (29) située devant le véhicule (1) représentée.

4. Procédé selon l'une quelconque des revendications précédentes, **caractérisé en ce que**
des données de chaussée concernant un tracé de chaussée situé devant le véhicule (1) sont en outre collectées et
la représentation de la chaussée (29) est générée au moyen des données de chaussée.

5. Procédé selon l'une quelconque des revendications précédentes, **caractérisé en ce que,**
lorsque le premier mode est activé, la représentation (20) comprend des éléments représentés en deux dimensions.

6. Procédé selon l'une quelconque des revendications précédentes, **caractérisé en ce que,**
lorsque le second mode est activé, la représentation (20) comprend des éléments représentés en trois dimensions.

7. Procédé selon l'une quelconque des revendications précédentes, **caractérisé en ce que**
la représentation (20) comprend au moins un élément de commande longitudinale graphique, l'élément de commande longitudinale étant associé à une fonction du système d'assistance au conducteur (4), laquelle concerne la commande du véhicule (1) dans la direction longitudinale.

8. Procédé selon l'une quelconque des revendications précédentes,
**caractérisé en ce que**
la représentation comprend au moins un élément de commande transversale graphique, l'élément de commande transversale étant associé à une fonction du système d'assistance au conducteur (4), laquelle concerne la commande du véhicule (1) dans la direction transversale.

9. Procédé selon l'une quelconque des revendications précédentes, **caractérisé en ce que**
les données de sortie du système d'assistance au conducteur (4) comprennent des informations sur une intervention automatique dans la commande du mouvement du véhicule (1) et la représentation (20) est modifiée en fonction de l'intervention automatique.

10. Procédé selon l'une quelconque des revendications précédentes, **caractérisé en ce que**
le système d'assistance au conducteur (4) comprend un système d'alerte de franchissement de ligne, un système d'assistance au dépassement et/ou un système d'assistance au maintien de distance.

11. Système d'informations comprenant un premier mode pouvant être activé et un second mode pouvant être activé, le système d'informations comprenant :
une unité d'acquisition (3), au moyen de laquelle les données de sortie d'un système d'assistance au conducteur (4) d'un véhicule (1) peuvent être collectées ;
une unité graphique (5), au moyen de laquelle des données graphiques d'une représentation (20) peuvent être générées en fonction du mode activé et des données de sortie ; et
une unité de sortie (6) comprenant une surface d'affichage (6a), au moyen de laquelle les données graphiques peuvent être sorties ;
un signal de sélection de mode pouvant en outre être reçu par l'unité d'acquisition (3) ;
le premier ou le second mode pouvant être activé, en fonction du signal de sélection de mode ;
les données graphiques comprenant une représentation de chaussée (29) d'une chaussée située devant le véhicule (1) et une représentation de véhicule propre (10),
la représentation de véhicule propre (10) comprenant, lorsque le premier mode est activé, une représentation partielle d'une partie avant du véhicule et
la représentation de véhicule propre (10) comprenant, lorsque le second mode est activé, une représentation d'une vue du véhicule arrière,
**caractérisé en ce que**
lorsqu'une commutation entre le premier et le second mode est effectuée au moyen du signal de sélection de mode,
une animation de transition peut être générée et sortie,
l'animation de transition comprenant un agrandissement continu de la représentation, un point d'observation virtuel pouvant être déplacé dans la direction opposée à la direction de conduite.

12. Système d'informations selon la revendication 11,
**caractérisé en ce que**
les données de sortie du système d'assistance au conducteur (4) comprennent des informations sur une intervention automatique dans la commande du mouvement du véhicule (1) et la représentation peut être modifiée en fonction de l'intervention automatique.

13. Véhicule (1) comprenant un système d'informations selon la revendication 11 ou 12.
